# EUROPEAN PATENT SPECIFICATION

(11) **EP 4 524 800 B1**
(45) Date of publication and mention of the grant of the patent: **24.06.2026**
(21) Application number: 23867148.1
(22) Date of filing: 02.08.2023
(51) Int. Cl.: G06F 21/53, G06F 21/57, G06F 21/62, G06F 21/74, G06F 21/78

(54) **METHOD, DEVICE AND APPARATUS FOR DYNAMICALLY CONFIGURING SECURE MEMORY, AND STORAGE MEDIUM**
VERFAHREN, VORRICHTUNG UND VORRICHTUNG ZUR DYNAMISCHEN KONFIGURATION EINES SICHEREN SPEICHERS UND SPEICHERMEDIUM
PROCÉDÉ, DISPOSITIF ET APPAREIL DE CONFIGURATION DYNAMIQUE DE MÉMOIRE SÉCURISÉE, SUPPORT DE STOCKAGE

(30) Priority: 23.09.2022 CN 202211168325
(43) Date of publication of application: 19.03.2025
(73) Proprietor: Alipay (Hangzhou) Information Technology Co., Ltd., Hangzhou, Zhejiang 310000 (CN)
(72) Inventor: ZHANG, Xuan, Hangzhou, Zhejiang 310000 (CN); WU, Chao, Hangzhou, Zhejiang 310000 (CN); XIN, Zhi, Hangzhou, Zhejiang 310000 (CN)
(74) Representative: Fish & Richardson P.C.
(86) International application number: PCT/CN2023/110872
(87) International publication number: WO 2024/060853

(56) References cited:
- WO-A1-2016/172862
- CN-A- 107 003 904
- CN-A- 111 459 673
- CN-A- 111 459 673
- CN-A- 115 544 585
- US-A1- 2016 065 593
- US-A1- 2020 151 320

## Description

### TECHNICAL FIELD

This specification relates to the computer field, and in particular, to methods, devices, and apparatuses for dynamically configuring a secure memory, and storage media.

### BACKGROUND

With the development of Internet-related technologies, there are various information flow manners. In addition, people are more conscious of information protection. Currently, a trusted execution environment (TEE) can be constructed on a device of a user based on a trustzone technology. The trusted execution environment provides a secure environment that is isolated from a rich execution environment (REE) on the device of the user, to protect security of an application running in the trusted execution environment, thereby facilitating privacy protection.

How to configure a secure memory required for running the TEE is an urgent problem to be resolved. This specification provides a method for dynamically configuring a secure memory.

CN 111 459 673 A and WO 2016/172862 A1 are relevant prior art.

### SUMMARY

The scope of the invention is defined by the independent claims.

This specification provides methods, devices, and apparatuses for dynamically configuring a secure memory, and storage media.

This specification uses the following technical solution: This specification provides a method for dynamically configuring a secure memory. The method is applied to a trusted application and includes: receiving a registration instruction of a secure memory, where the registration instruction carries a memory address requested by a client application; and calling a registration interface of an operating system in a trusted execution environment, and sending a registration request of the secure memory to a processor trusted framework unit, based on the registration instruction, so that the processor trusted framework unit updates, based on the registration request, an attribute of memory space corresponding to the memory address to a secure attribute.

This specification provides a method for dynamically configuring a secure memory. The method is applied to an operating system in a trusted execution environment and includes: receiving a call request of a trusted application for a registration interface, where the call request carries a memory address requested by a client application in a rich execution environment; and generating a registration request based on the call request, and sending the registration request to a processor trusted framework unit, so that the processor trusted framework unit updates, based on the registration request, an attribute of memory space corresponding to the memory address to a secure attribute.

This specification provides a method for dynamically configuring a secure memory. The method is applied to a processor trusted framework unit and includes: receiving a registration request sent by an operating system in a trusted execution environment, where the registration request includes a memory address; and updating, based on the registration request, an attribute of memory space corresponding to the memory address to a secure attribute.

This specification provides a device for dynamically configuring a secure memory. The device includes a client application in a rich execution environment, an operating system in a trusted execution environment, a trusted application, and a processor trusted framework unit. The following is included: The client application is configured to: determine a memory address required for executing a service in the trusted execution environment, and send a registration instruction to the trusted application, where the registration instruction carries the memory address. The trusted application is configured to: receive the registration instruction sent by the client application, and generate, based on the registration instruction carrying the memory address, a call request for calling a registration interface of the operating system in the trusted execution environment. The operating system in the trusted execution environment is configured to: receive the call request of the trusted application for the registration interface, generate a registration request based on the call request, and send the registration request to the processor trusted framework unit. The processor trusted framework unit is configured to: receive the registration request sent by the operating system in the trusted execution environment, and update, based on the registration request, an attribute of memory space corresponding to the memory address to a secure attribute.

This specification provides an apparatus for dynamically configuring a secure memory, including: a receiving module, configured to receive a registration instruction of a secure memory, where the registration instruction carries a memory address requested by a client application; and a memory configuration module, configured to: call a registration interface of an operating system in a trusted execution environment, and send a registration request of the secure memory to a processor trusted framework unit, based on the registration instruction, so that the processor trusted framework unit updates, based on the registration request, an attribute of memory space corresponding to the memory address to a secure attribute.

This specification provides an apparatus for dynamically configuring a secure memory, including: a receiving module, configured to receive a call request of a trusted application for a registration interface, where the call request carries a memory address requested by a client application in a rich execution environment;

and a memory configuration module, configured to: generate a registration request based on the call request, and send the registration request to a processor trusted framework unit, so that the processor trusted framework unit updates, based on the registration request, an attribute of memory space corresponding to a size of the memory address to a secure attribute.

This specification provides an apparatus for dynamically configuring a secure memory, including: a receiving module, configured to receive a registration request sent by an operating system in a trusted execution environment, where the registration request includes a memory address; and a memory configuration module, configured to update, based on the registration request, an attribute of memory space corresponding to the memory address to a secure attribute.

This specification provides a computer-readable storage medium. The storage medium stores a computer program. When the computer program is executed by a processor, the above-mentioned method for dynamically configuring a secure memory is implemented.

The above-mentioned at least one technical solution used in this specification can achieve the following beneficial effects: In the method for dynamically configuring a secure memory provided in this specification, the client application in the rich execution environment sends the registration instruction of the secure memory to the trusted application in the trusted execution environment, where the registration instruction carries the memory address requested by the client application. The trusted application calls the registration interface of the operating system in the trusted execution environment, and sends the registration request of the secure memory to the processor trusted framework unit, based on the registration instruction, so that the processor trusted framework unit updates, based on the registration request, the attribute of the memory space corresponding to the memory address to the secure attribute.

It can be seen from the foregoing method that, in the method, through dynamically configuring the secure memory, a security requirement is satisfied, and memory resource waste is reduced.

### BRIEF DESCRIPTION OF DRAWINGS

The accompanying drawings described herein are used to provide further understanding of this specification and constitute a part of this specification. The example embodiments of this specification and their descriptions are used to explain this specification, and do not constitute an undue limitation on this specification.
FIG. 1 is a schematic flowchart illustrating a method for dynamically configuring a secure memory, according to an embodiment of this specification;
FIG. 2 is a schematic diagram illustrating interaction between a client application and a trusted application by using a processor trusted framework unit, according to an embodiment of this specification;
FIG. 3 is a schematic flowchart illustrating a method for dynamically configuring a secure memory, according to an embodiment of this specification;
FIG. 4 is a schematic flowchart illustrating a method for dynamically configuring a secure memory, according to an embodiment of this specification;
FIG. 5a is a schematic diagram illustrating a device for dynamically configuring a secure memory, according to an embodiment of this specification;
FIG. 5b is a schematic diagram illustrating a device for dynamically configuring a secure memory, according to an embodiment of this specification;
FIG. 6 is a schematic diagram illustrating a detailed process of interaction among a client application, a processor trusted framework unit, a trusted application, and an operating system in a trusted execution environment, according to an embodiment of this specification;
FIG. 7 is a schematic diagram illustrating an apparatus for dynamically configuring a secure memory, according to an embodiment of this specification;
FIG. 8 is a schematic diagram illustrating an apparatus for dynamically configuring a secure memory, according to an embodiment of this specification; and
FIG. 9 is a schematic diagram illustrating an apparatus for dynamically configuring a secure memory, according to an embodiment of this specification.

### DESCRIPTION OF EMBODIMENTS

To make the objectives, technical solutions, and advantages of this specification clearer, the following clearly and comprehensively describes the technical solutions of this specification with reference to specific embodiments of this specification and corresponding accompanying drawings. It is clear that the described embodiments are merely some rather than all of embodiments of this specification. All other embodiments obtained by a person of ordinary skill in the art based on embodiments of this specification without creative efforts shall fall within the protection scope of this application.

Different from a method for configuring a secure memory during initialization of a memory access control unit in a start phase of a device, an embodiment of this specification provides a new method for configuring a secure memory to avoid memory resource waste due to a fixed secure memory size. Further, the following problem can be resolved: To satisfy normal running of a trusted application in a trusted execution environment, a device configures a size of a secure memory based on a memory upper limit required by a trusted application running in the trusted execution environment, which aggravates a strain of memory resources.

Currently, one of purposes of constructing the trusted execution environment on the device is to improve data security when a client application (CA) runs on the device, thereby avoiding a risk. Usually, when the client application executes a service, if the service involves sensitive data of a user or content such as secure computing, the client application transfers a corresponding service step to a trusted application (Trust Application, TA) in the trusted execution environment for execution. Because the trusted execution environment and a rich execution environment are mutually isolated environments, malware in the rich execution environment cannot acquire sensitive data in the trusted execution environment. Similarly, the client application also cannot acquire the sensitive data, and provides, for the trusted application, only data required for executing a service, to obtain a service execution result returned by the trusted application. Specifically, how to obtain the service execution result is like a "black box" for the client application in the rich execution environment. Internal data cannot be obtained.

The following describes in detail the technical solutions provided in embodiments of this specification with reference to the accompanying drawings.

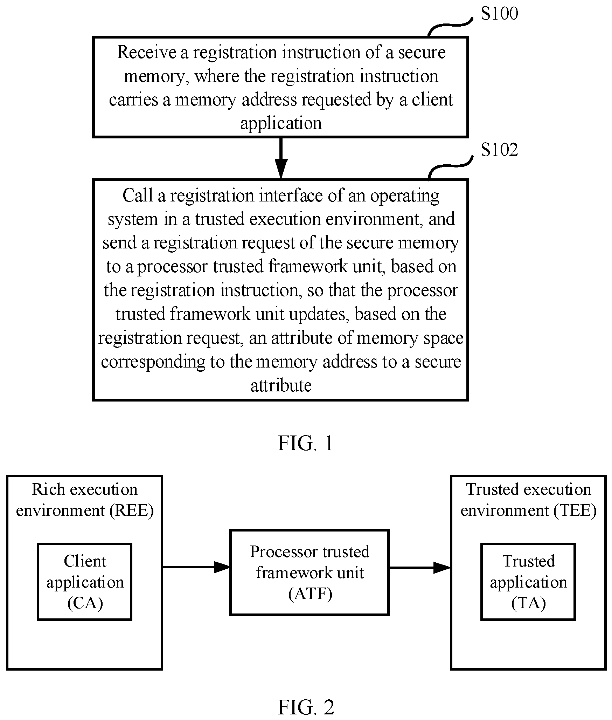

FIG. 1 is a schematic flowchart illustrating a method for dynamically configuring a secure memory in this specification. The method includes step S100 to step S102.

S100: Receive a registration instruction of a secure memory, where the registration instruction carries a memory address requested by a client application.

When a trusted application executes a service, support of hardware device resources such as a processor and a memory is needed. Therefore, a secure memory needs to be configured for the trusted application in advance before the trusted application executes the service. The secure memory is a part of a device memory. By configuring a part of a memory address in the device memory as a secure attribute, only the trusted application in a trusted execution environment can access data of the memory address, and a client application in a rich execution environment cannot access the data of the memory address.

To avoid a series of problems caused by currently configuring a secure memory of a fixed size, in one or more embodiments of this specification, when being started, the device no longer configures the secure memory of the fixed size by using a memory access control unit. However, when the client application executes the service, the trusted application in the trusted execution environment needs to configure the secure memory when assisting in execution of the service.

The trusted application running in the trusted execution environment of the device is an execution entity. The trusted application can receive the registration instruction sent by the client application. The registration instruction is an instruction used for registering the device memory as a secure memory. How much memory space the trusted application needs to execute the service cannot be determined by the trusted application. Therefore, the registration instruction carries the memory address requested by the client application.

Further, because the trusted execution environment can include a plurality of trusted applications, and the trusted applications in the trusted execution environment are isolated from each other, the trusted applications cannot access each other without authorization. Generally, only one trusted application is a trusted application subsequently used for executing a privacy service. For example, if the trusted execution environment includes trusted applications A, B, and C that are respectively used for face recognition, fingerprint recognition, and voiceprint recognition, and a service to be executed by the trusted application is face payment, only the trusted application A is a trusted application needed for executing a subsequent service.

Therefore, before sending the registration instruction, the client application can determine, from each trusted application in the trusted execution environment, a trusted application needed in subsequent service execution. Specifically, the client application can determine, from each trusted application in the trusted execution environment, the trusted application needed in subsequent service execution, and send a verification request to the trusted application, to verify whether the trusted application can execute the service. However, the trusted application can return acknowledgment information or negative acknowledgment information based on the verification request. After receiving the acknowledgment information, the client application can further perform subsequent step S102; or otherwise, the client application can display error prompt information, to prompt the user that the service cannot be executed in the trusted execution environment. Certainly, how the client application specifically determines whether the trusted application can normally provide service support is a relatively mature technology. Details are not described in this specification.

Further, because the rich execution environment and the trusted execution environment are two mutually isolated environments, there is a risk if the client application directly sends the registration instruction to the trusted application. For example, the service processed by the client application is fingerprint payment accompanied by a case of stealing fingerprint information. Because the client application directly sends the registration instruction to the trusted application, and the rich execution environment obtains verification information of encrypted fingerprint data, the trusted execution environment is no longer secure, and the fingerprint data of the user may be stolen. Therefore, currently, a processor trusted framework unit (ARM Trusted Firmware, ATF) forwards the registration instruction.

FIG. 2 is a schematic diagram illustrating interaction between a client application (CA) and a trusted application (TA) by using a processor trusted framework unit (ATF), according to this specification. It can be determined that, a left side is a rich execution environment (REE) in which the client application sends a registration instruction to the processor trusted framework unit, a middle part is the processor trusted framework unit configured to distribute the registration instruction sent by the client application, and a right side is a trusted execution environment (TEE) in which the trusted application receives the registration instruction forwarded by the processor trusted framework unit.

The trusted application performs verification on the client application sending the registration instruction; and if it is determined through verification that the sending party is a client application authorized to call itself, trusted application accepts the registration instruction forwarded by the processor trusted framework unit. If it is determined through verification that the sending party is not a client application authorized to call itself, the trusted application refuses to receive the registration instruction sent by the client application.

In addition, one trusted application can process services of one or more client applications. For example, a trusted application D in the trusted execution environment can process a security verification service. In the current rich execution environment, a plurality of client applications request to process security verification services. After the trusted application D performs verification on each client application, each client application forwards data related to the security verification service to the trusted application D by using the processor trusted framework unit. After receiving the data sent by each client application, the trusted application D processes the security verification service of each client application by using the data.

S102: Call a registration interface of an operating system in a trusted execution environment, and send a registration request of the secure memory to a processor trusted framework unit, based on the registration instruction, so that the processor trusted framework unit updates, based on the registration request, an attribute of memory space corresponding to the memory address to a secure attribute.

After the trusted application receives the registration instruction, because the trusted application is not authorized to update the attribute of the device memory to the secure attribute, based on the registration instruction, the trusted application can call the registration interface of the operating system in the trusted execution environment, and send the registration request of the secure memory to the processor trusted framework unit by using the operating system in the trusted execution environment. The processor trusted framework unit can update, based on the registration request, the attribute of the memory space corresponding to the memory address to the secure attribute. In this way, the memory space can only be accessed by the trusted application, to ensure security of subsequent service execution and reduce a risk of user privacy leakage.

Specifically, first, because the operating system in the trusted execution environment generally provides different interfaces for implementing functions or services for various trusted applications, the trusted application needs to first determine an interface for registration of the secure memory, to facilitate calling of the interface for registration of the secure memory. Therefore, based on the received registration instruction, the trusted application can query a function of each interface of the operating system in the trusted execution environment, and determine the interface for registration of the secure memory, that is, a registration interface.

Then, after finding the registration interface, the trusted application can call the registration interface, and send the memory address to the operating system in the trusted execution environment.

Afterward, the operating system in the trusted execution environment can send the registration request of the secure memory to the processor trusted framework unit based on service logic corresponding to the registration interface. The registration request carries the memory address. The processor trusted framework unit updates the attribute of the memory to the secure attribute, so that the memory is allowed to be used only by a corresponding trusted application.

The operating system in the trusted execution environment can generate the registration request based on the service logic corresponding to the registration interface and the memory address carried in the call request.

Specifically, after the registration interface accepts the call of the trusted application, a service logic layer corresponding to the operating system in the trusted execution environment establishes a service procedure based on the memory address, and runs code of the service logic corresponding to the registration interface, to generate the registration request. In other words, code, complying with syntax specifications, for generating the registration request is generated based on the service logic, and the code is run to generate the registration request. The registration request carries the memory address.

Then, after the operating system in the trusted execution environment sends the registration request to the processor trusted framework unit, the processor trusted framework unit sends a call instruction to a memory protection controller (TrustZone Address Space Controller, TZASC) based on the registration request. The call instruction carries the memory address. The operating system in the trusted execution environment sends the registration request to the processor trusted framework unit, and the processor trusted framework unit receives the sent registration request. Verification can be performed first. After the verification succeeds, a next operation is performed. If the verification fails, error information is returned, and the error information is used to prompt a security risk. Certainly, because a technology of how to perform inter-program verification (for example, authentication) is a relatively mature technology, details are not described in this specification, and a specific verification manner is not limited.

Finally, the memory protection controller can determine the memory address based on the call instruction of the processor trusted framework unit, and determine, from idle storage space of the memory, a contiguous physical address of a memory that needs to be registered as a secure memory. An attribute of the determined contiguous physical address is updated to the secure attribute. After updating the attribute of the contiguous physical address, the memory protection controller can further return acknowledgment information to the processor trusted framework unit. After receiving the acknowledgement information, the processor trusted framework unit determines that registration of the secure memory succeeds, and returns, to the operating system in the trusted execution environment, information about completion of registration of the secure memory. After receiving the information about completion of registration of the secure memory, the operating system in the trusted execution environment performs mapping on the memory address, that is, performs mapping on the contiguous physical address, to generate a corresponding mapping table. The mapping table includes a virtual address corresponding to the contiguous physical address and a mapping relationship between the contiguous physical address and the virtual address. The mapping relationship is not limited in this specification. In other words, when mapping is performed on the contiguous physical address, the mapping relationship can be A corresponding to A or another logical relationship, provided that mapping can be performed on the contiguous physical address. After the physical address is converted to the virtual address, the virtual address and the information about completion of registration of the secure memory are returned to the trusted application. After receiving the virtual address and the information about completion of registration of the secure memory, the trusted application determines that the trusted application and the client application can jointly execute a secure service. Therefore, the trusted application can notify, by using the processor trusted framework unit, the client application that registration of the secure memory is completed, so that the client application determines based on the notification that the service can be executed.

For example, the client application needs to execute a biometric feature-based login service. Because a biometric feature matching process involves user privacy, to ensure data security and user privacy, the matching process can be executed by the trusted application in the trusted execution environment. Therefore, before step S100, the client application can send, by using the processor trusted framework unit, the registration instruction of the secure memory to the trusted application, in the trusted execution environment, used for biometric feature matching. After registration of the secure memory is completed by the memory protection controller in step S102, upon receiving the information about completion of registration of the secure memory, the trusted application can send, to the client application by using the processor trusted framework unit, the notification indicating that registration of the secure memory is completed. After receiving the notification, the client application can determine that the trusted application in the trusted execution environment is ready, and determine that a login service can be executed. An interface of the rich execution environment can be called to collect a to-be-matched image by using an image sensor of the device, and send, by using the processor trusted framework unit, the to-be-matched image to the trusted application for biometric feature matching. The trusted application can store, based on the registered secure memory, the to-be-matched image and a target image obtained from a server, and execute a biometric feature matching service based on the secure memory. A matching result is returned to the client application by using the processor trusted framework unit.

Based on the method for dynamically configuring a secure memory shown in FIG. 1, it can be seen that in the method for dynamically configuring a secure memory provided in this specification, the client application in the rich execution environment sends the registration instruction of the secure memory to the trusted application in the trusted execution environment, where the registration instruction carries the memory address requested by the client application. The trusted application calls the registration interface of the operating system in the trusted execution environment, and sends the registration request of the secure memory to the processor trusted framework unit, based on the registration instruction, so that the processor trusted framework unit updates, based on the registration request, the attribute of the memory space corresponding to the memory address to the secure attribute.

It can be seen from the foregoing method that, in the method, when the client application processes a service involving sensitive data, the service is transferred to the trusted application in the trusted execution environment for processing; and before the trusted application performs processing, the client application estimates a size of the secure memory required for processing the service and then configures the secure memory. In other words, in a manner of instantly configuring a secure memory, a memory waste problem is avoided, and memory utilization is improved, thereby reaching a purpose of protecting sensitive information.

In addition, in step S102, when calling the registration interface of the operating system in the trusted execution environment, the trusted application can further perform authentication on the trusted application to improve security. When it is determined that the trusted application is authorized to register the secure memory, the registration interface generates the registration request sent to the processor trusted framework unit.

Specifically, to perform authentication on a trusted application for calling each interface of the system, the operating system in the trusted execution environment can configure a trusted application list of each interface in advance for the interface. Trusted application lists of different interfaces are not all the same and can be set as required. This is not limited in this specification.

Therefore, the registration interface of the operating system in the trusted execution environment can also be configured with a trusted application list. The trusted application list includes an identifier of a trusted application that is authorized to call the registration interface. After receiving the call request, the registration interface of the operating system in the trusted execution environment can determine the identifier, carried in the call request, of the trusted application, and compare the identifier carried in the call request with each identifier in the trusted application list, to determine whether the trusted application is authorized to call the registration interface.

The registration interface compares the identifier carried in the trusted application with each identifier in the trusted application list. If the identifier carried in the trusted application is consistent with an identifier of any trusted application, authorized to call the registration interface, in the trusted application list included in the registration interface, it is determined that the trusted application is authorized to call the registration interface, and the registration interface accepts the call of the trusted application. In other words, a corresponding service is executed based on the call request of the trusted application through running code corresponding to the registration interface. If the identifier carried in the trusted application is inconsistent with an identifier of each trusted application, authorized to call the registration interface, in the trusted application list included in the registration interface, it can be determined that the trusted application is not authorized to call the registration interface to refuse the call of the trusted application. In addition, the operating system of the trusted execution environment can further send an information error prompt to the trusted application. The prompt is used by the trusted application to determine that the trusted application is not authorized to call the registration interface.

For example, it is assumed that the trusted execution environment includes three trusted applications: a trusted application A, a trusted application B, and a trusted application C, respectively. An identifier carried in the trusted application Ais 1, an identifier carried in the trusted application B is 2, and an identifier carried in the trusted application C is 3. A registration interface M includes a list of trusted applications authorized to call the registration interface M. The trusted application list includes the identifier 1 and the identifier 2. If the trusted applications A, B, and C each send a call request for calling the registration interface M, after receiving each call request, the registration interface M can compare the identifier of the trusted application with the trusted application list based on the identifiers 1, 2, and 3, carried in the call requests, of the trusted applications and the trusted application list included in the registration interface M. It can be determined based on a comparison result that the trusted application A and the trusted application B can call the registration interface M. However, because the identifier 2 is inconsistent with any identifier in the trusted application list, the trusted application B is not authorized to call the registration interface M. The registration interface M accepts the trusted application A and the trusted application B, sends an information error prompt to the trusted application C, and refuses call of the trusted application C.

In addition, after the operating system in the trusted execution environment sends the information error prompt to the trusted application, the trusted application can determine that the service cannot be further executed. Certainly, the trusted application can further return, to the client application by using the processor trusted framework unit, a result indicating not authorized to call the registration interface. The client application can determine that execution of the service fails, and further display the result indicating not authorized to call the registration interface, so that a user initiating the service can determine that a problem exists in execution of the service.

Further, in one or more embodiments of this specification, generally, the processor trusted framework unit does not have a function of changing the attribute of the memory to the secure attribute when the secure memory is not configured. Code of the processor trusted framework unit can be updated in advance to implement a function of the processor trusted framework unit in calling the memory protection controller based on the registration request to determine a contiguous physical address of a memory to be registered as the secure memory in idle storage space of the memory in step S102. Through the update, code for implementing the above-mentioned function of registering the secure memory is added for the processor trusted framework unit, such as interface code of the registration interface and code for updating the attribute of the memory. In this way, after receiving the registration request, the processor trusted framework unit can execute the operation described in step S102, and call the memory protection controller to register the secure memory in real time. The secure memory is dynamically configured, and the memory utilization of the device is improved.

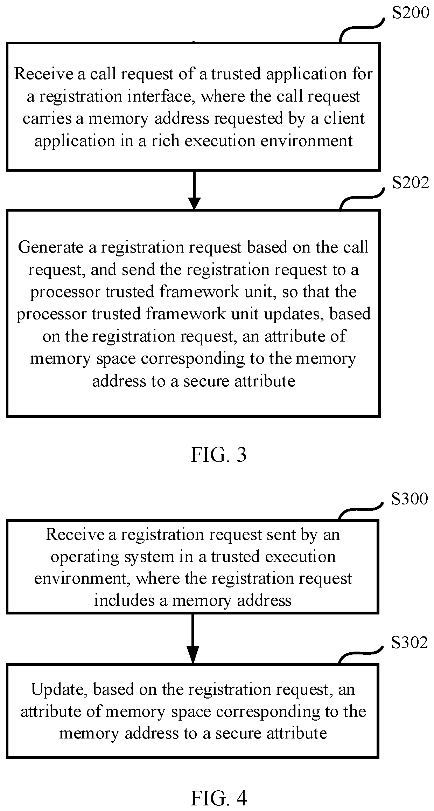

Based on the procedure of dynamically configuring the secure memory shown in FIG. 1, an embodiment of this specification further provides a procedure, executed by an operating system in a trusted execution environment, of dynamically configuring a secure memory. As shown in FIG. 3, step S200 to step S202 are included.

S200: Receive a call request of a trusted application for a registration interface, where the call request carries a memory address requested by a client application in a rich execution environment.

In one or more embodiments of this specification, the procedure of dynamically configuring the secure memory is described by using the operating system in the trusted execution environment of a device as an execution entity. In one or more embodiments of this specification, the dynamically configured secure memory is used to support the trusted application in executing a service rather than support running of the system. Therefore, the operating system in the trusted execution environment can receive the call request of the trusted application for the registration interface. The call request carries the memory address requested by the client application in the rich execution environment. A specific process and a specific reason of requesting the memory address by the client application in the rich execution environment are described above. Details are not described herein again.

After the client application determines the memory address, the client application can distribute the memory address to the trusted application by using the processor trusted framework unit, and the trusted application can request to call the registration interface of the operating system in the trusted execution environment, and send the memory address to the operating system in the trusted execution environment.

In addition, before executing the service based on the call request by using code of the registration interface, the operating system in the trusted execution environment can determine, based on an identifier of the trusted application carried in the call request, whether the trusted application is authorized to call the registration interface.

Specifically, to perform authentication on a trusted application for calling each interface of the system, the operating system in the trusted execution environment can configure a trusted application list of each interface in advance for the interface. Trusted application lists of different interfaces are not all the same and can be set as required. This is not limited in this specification.

Therefore, the registration interface of the operating system in the trusted execution environment can also be configured with a trusted application list. The trusted application list includes an identifier of a trusted application that is authorized to call the registration interface. After receiving the call request, the registration interface of the operating system in the trusted execution environment can determine the identifier, carried in the call request, of the trusted application, and compare the identifier carried in the call request with each identifier in the trusted application list, to determine whether the trusted application is authorized to call the registration interface.

A specific operation process of the authentication includes: The registration interface compares the identifier carried in the trusted application with each identifier in the trusted application list. If the identifier carried in the trusted application is consistent with an identifier of any trusted application, authorized to call the registration interface, in the trusted application list included in the registration interface, it is determined that the trusted application is authorized to call the registration interface, and the registration interface accepts the call of the trusted application. In other words, a corresponding service is executed based on the call request of the trusted application through running code corresponding to the registration interface. If the identifier carried in the trusted application is inconsistent with an identifier of each trusted application, authorized call the registration interface, in the trusted application list included in the registration interface, it can be determined that the trusted application is not authorized to call the registration interface to refuse the call of the trusted application. In addition, the operating system of the trusted execution environment can further send an information error prompt to the trusted application. The prompt is used by the trusted application to determine that the trusted application is not authorized to call the registration interface.

For example, it is assumed that the trusted execution environment includes three trusted applications: a trusted application A, a trusted application B, and a trusted application C, respectively. An identifier carried in the trusted application Ais 1, an identifier carried in the trusted application B is 2, and an identifier carried in the trusted application C is 3. A registration interface M includes a list of trusted applications authorized to call the registration interface M. The trusted application list includes the identifier 1 and the identifier 2. If the trusted applications A, B, and C each send a call request for calling the registration interface M, after receiving each call request, the registration interface M can compare the identifier of the trusted application with the trusted application list based on the identifiers 1, 2, and 3, carried in the call requests, of the trusted applications and the trusted application list included in the registration interface M. It can be determined based on a comparison result that the trusted application A and the trusted application B can call the registration interface M. However, because the identifier 2 is inconsistent with any identifier in the trusted application list, the trusted application B is not authorized to call the registration interface M. The registration interface M accepts the trusted application A and the trusted application B, sends an information error prompt to the trusted application C, and refuses call of the trusted application C.

In addition, after the operating system in the trusted execution environment sends the information error prompt to the trusted application, the trusted application can determine that the service cannot be further executed. Certainly, the trusted application can further return, to the client application by using the processor trusted framework unit, a result indicating not authorized to call the registration interface. The client application can determine that execution of the service fails, and further display the result indicating not authorized to call the registration interface, so that a user initiating the service can determine that a problem exists in execution of the service.

S202: Generate a registration request based on the call request, and send the registration request to a processor trusted framework unit, so that the processor trusted framework unit updates, based on the registration request, an attribute of memory space corresponding to the memory address to a secure attribute.

Because the operating system in the trusted execution environment is an isolated environment, a memory attribute of a device cannot be directly updated, that is, the secure memory cannot be directly configured by the operating system in the trusted execution environment. Therefore, in one or more embodiments of this specification, after the operating system in the trusted execution environment receives the call request by using the registration interface, the operating system in the trusted execution environment generates the registration request based on service logic corresponding to the registration interface and the memory address carried in the call request, sends the registration request to the processor trusted framework unit, calls a memory protection controller by using the processor trusted framework unit, and updates the attribute of the memory space to the secure attribute, so that the memory is allowed to be used by only a corresponding trusted application.

Specifically, first, the operating system in the trusted execution environment can determine the memory address based on the registration interface called by the trusted application. Interface code of the registration interface runs based on the service logic corresponding to the registration interface.

Then, through running the interface code, the operating system in the trusted execution environment can generate the registration request based on the memory address carried in the call request.

Finally, the operating system in the trusted execution environment sends the registration request to the processor trusted framework unit, and calls the memory protection controller by using the processor trusted framework unit, to update the attribute of the memory space to the secure attribute.

Generally, the processor trusted framework unit does not have a function of changing the attribute of the memory to the secure attribute when the secure memory is not configured. Code of the processor trusted framework unit can be updated in advance to implement a function of the processor trusted framework unit in calling the memory protection controller based on the registration request to determine a contiguous physical address of a memory to be registered as the secure memory in idle storage space of the memory. Through the update, code for implementing the above-mentioned function of registering the secure memory is added for the processor trusted framework unit, such as interface code of the registration interface and code for updating the attribute of the memory. In this way, after receiving the registration request, the processor trusted framework unit can execute the above-mentioned operation, and call the memory protection controller to register the secure memory in real time. The secure memory is dynamically configured, and the memory utilization of the device is improved.

In one or more embodiments of this specification, if the memory protection controller has a function of updating an attribute of memory space, under call of the processor trusted framework unit, a corresponding contiguous physical address can be determined based on the memory address, and an attribute of the contiguous physical address is updated to a secure attribute. Then, the memory protection controller can return acknowledgment information to the processor trusted framework unit. After receiving the acknowledgment information, the processor trusted framework unit returns, to the operating system in the trusted execution environment, information about completion of registration of the secure memory. After receiving the information about completion of registration of the secure memory, the operating system in the trusted execution environment the operating system in the trusted execution environment performs mapping on the memory address, that is, performs mapping on the contiguous physical address, to generate a corresponding mapping table. The mapping table includes a virtual address corresponding to the contiguous physical address and a mapping relationship between the contiguous physical address and the virtual address. The mapping relationship is not limited in this specification. In other words, when mapping is performed on the contiguous physical address, the mapping relationship can be A corresponding to A or another logical relationship, provided that mapping can be performed on the contiguous physical address. After the physical address is converted to the virtual address, the virtual address and the information about completion of registration of the secure memory are returned to the trusted application. After receiving the virtual address and the information about completion of registration of the secure memory, the trusted application determines that the trusted application and the client application can jointly execute a secure service.

In addition, the operating system in the trusted execution environment sends the registration request to the processor trusted framework unit, and the processor trusted framework unit receives the sent registration request. Verification can be performed first. After the verification succeeds, a next operation is performed. If the verification fails, error information is returned, and the error information is used to prompt a security risk. Certainly, because a technology of how to perform inter-program verification (for example, authentication) is a relatively mature technology, details are not described in this specification, and a specific verification manner is not limited.

Based on the procedure of dynamically configuring the secure memory shown in FIG. 1, an embodiment of this specification further provides a procedure, executed by a processor trusted framework unit, of dynamically configuring a secure memory. As shown in FIG. 4, step S300 to step S302 are included.

S300: Receive a registration request sent by an operating system in a trusted execution environment, where the registration request includes a memory address.

In one or more embodiments of this specification, before the processor trusted framework unit receives the registration request, sent by the operating system in the trusted execution environment, of the secure memory, the processor trusted framework unit first receives a registration instruction sent by a client application in a rich execution environment, and forwards the registration instruction to a trusted application. The registration instruction carries a contiguous memory address obtained through sending a request to a contiguous memory allocator by the client application. A process of obtaining the contiguous memory address by the client application and a reason for forwarding the registration instruction by using the processor trusted framework unit are described above. Therefore, details are not described herein again. After receiving the registration instruction, the trusted application sends the call request to the operating system in the trusted execution environment. The operating system in the trusted execution environment generates the registration request based on the call request, and sends the registration request to the processor trusted framework unit. The registration request includes the memory address.

S302: Update, based on the registration request, an attribute of memory space corresponding to the memory address to a secure attribute.

The processor trusted framework unit sends a call instruction to a memory protection controller based on the registration request. The call instruction carries the memory address. The memory protection controller can determine the memory address based on the call instruction of the processor trusted framework unit, and determine, from idle storage space of the memory, a contiguous physical address of a memory that needs to be registered as a secure memory. An attribute of the determined contiguous physical address is updated to the secure attribute. A specific process in which the memory protection controller updates the attribute of the memory space to the secure attribute is described in detail. Therefore, details are not described again.

In addition, a computer device includes an electronic component. The electronic component has storage space of the electronic component. The memory space stores configuration information of the memory. After the electronic component is started, the electronic component determines, based on the configuration information, a secure memory, an unsecure memory, and a service list, authorized to access the above-mentioned secure memory, of the secure memory when a processor executes a corresponding service. In one or more embodiments of this specification, authentication of the electronic component needs to be performed before the processor accesses the secure memory. A specific authentication process is as follows: Before accessing the secure memory, the processor sends, to the electronic component, a request for accessing the secure memory. After receiving the access request, the electronic component compares the service with a corresponding service list stored in the electronic component and authorized to access the secure memory. If the service exists in the corresponding service list stored in the electronic component and authorized to access the secure memory, it is determined that the processor processing the service is authorized to use the secure memory and the processor is granted to access the secure memory. If the service does not exist in the corresponding service list stored in the electronic component and authorized to access the secure memory, it is determined that the processor processing the service is not authorized to use the secure memory and the processor is refused to access the secure memory.

In this specification, when the electronic component is started, the authentication operation is no longer performed, but authentication is performed in real time. The memory protection controller sends memory attribute change information to the electronic component. The electronic component stores, based on the information, memory information for changing to the secure memory and the corresponding service list. After the information change, when performing authentication on the processor, the electronic component determines based on latest memory information whether the processor is authorized to access the secure memory.

After the attribute of the contiguous physical address is updated to the secure attribute and the electronic component changes the memory information, subsequent steps are not repeated.

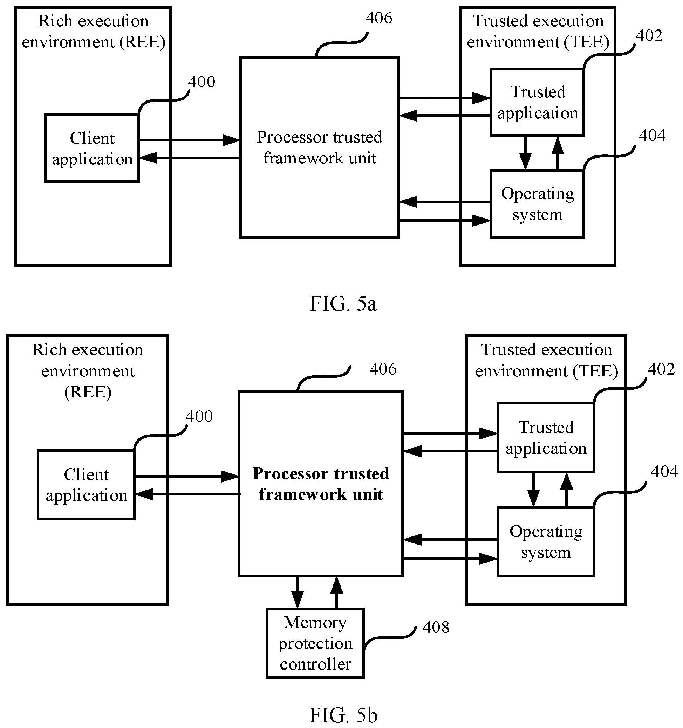

Based on the procedures for dynamically configuring the secure memory shown in FIG. 1, FIG. 3, and FIG. 4, an embodiment of this specification further provides a schematic diagram of a device for dynamically configuring a secure memory. As shown in FIG. 5a, at least the following programs are installed on a device for dynamically configuring a secure memory: a client application 400, a trusted application 402, an operating system 404 in a trusted execution environment, and a processor trusted framework unit 406.

The client application 400 runs in a rich execution environment (REE). The trusted application 402 and the operating system 404 in the trusted execution environment run in the trusted execution environment (TEE). The processor trusted framework unit 406 is middleware of the trusted execution environment and the rich execution environment, and is configured to provide a service that the trusted application 402 in the trusted execution environment interacts with the client application 400 in the rich execution environment.

The client application 400 is configured to: determine a memory address required for executing a service in the trusted execution environment, and send a registration instruction to the trusted application 402, where the registration instruction carries the memory address.

The trusted application 402 is configured to: receive the registration instruction sent by the client application 400, and generate, based on the registration instruction carrying the memory address, a call request for calling a registration interface of the operating system 404 in the trusted execution environment.

The operating system 404 in the trusted execution environment is configured to: receive the call request of the trusted application 402 for the registration interface, generate a registration request based on the call request, and send the registration request to the processor trusted framework unit 406.

The processor trusted framework unit 406 is configured to: receive the registration request sent by the operating system 404 in the trusted execution environment, and update, based on the registration request, an attribute of memory space corresponding to the memory address to a secure attribute.

Certainly, in one or more embodiments of this specification, as shown in FIG. 5b, the device for dynamically configuring a secure memory can further include a memory protection controller 408.

After receiving the registration request sent by the operating system 404 in the trusted execution environment, the processor trusted framework unit 406 is further configured to send a call instruction to the memory protection controller 408 based on the registration request.

The memory protection controller 408 is configured to update, based on the call instruction, the attribute of the memory space corresponding to the memory address to the secure attribute.

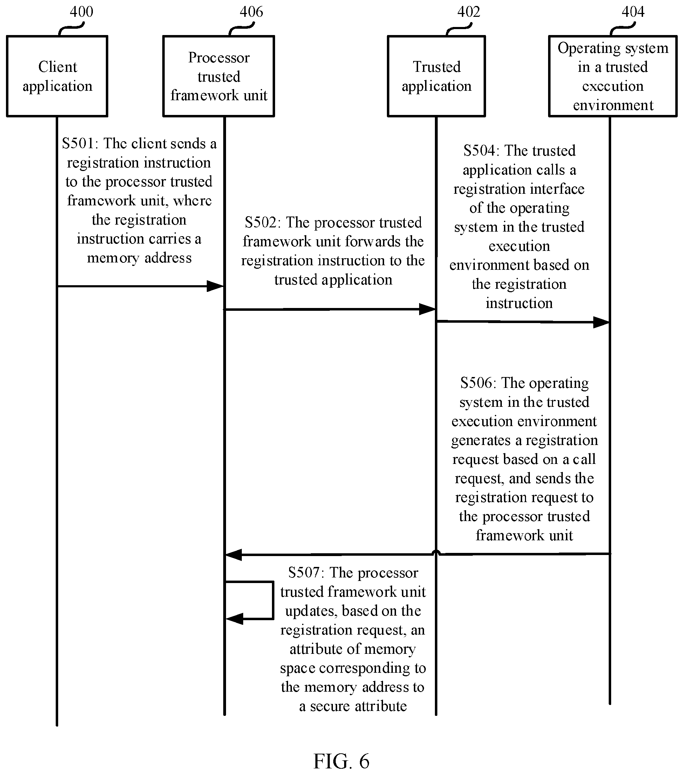

As shown in FIG. 6, the interaction process of all the parties in the above-mentioned procedure of dynamically configuring the secure memory specifically includes step S500 to step S507.

S500: The client application determines a memory address required for executing a service in the trusted execution environment.

S501: The client application sends the registration instruction to the processor trusted framework unit, where the registration instruction carries the memory address.

In one or more embodiments of this specification, the client application is configured to: determine a memory size required for executing a service in the trusted execution environment, and send a memory allocation request carrying the memory size to a contiguous memory allocator. The memory address returned by the contiguous memory allocator is received. The registration instruction is generated based on the memory address. The registration instruction is sent to the processor trusted framework unit. For specific content of the above-mentioned process, reference can be made to the related description in FIG. 1.

S502: The processor trusted framework unit forwards the registration instruction to the trusted application.

S503: The trusted application receives the registration instruction sent by the processor trusted framework unit.

S504: The trusted application calls the registration interface of the operating system in the trusted execution environment based on the registration instruction.

After receiving the registration instruction, the trusted application queries the registration interface from an interface of the operating system in the trusted execution environment based on the registration instruction. The registration interface is called, and the memory address is sent to the operating system in the trusted execution environment, so that the operating system in the trusted execution environment sends the registration request of the secure memory to the processor trusted framework unit based on service logic corresponding to the registration interface, where the registration request carries the memory address. For specific content of the above-mentioned process, reference can be made to the related description in FIG. 1.

S505: The operating system in the trusted execution environment receives the call request of the trusted application for the registration interface.

S506: The operating system in the trusted execution environment generates the registration request based on the call request, and sends the registration request to the processor trusted framework unit.

Specifically, the operating system in the trusted execution environment generates the registration request based on the service logic corresponding to the registration interface and the memory address carried in the call request. The registration request is sent to the processor trusted framework unit, and the memory protection controller is called by using the processor trusted framework unit, to update the attribute of the memory space to the secure attribute. The registration request includes the memory address. For specific content of the above-mentioned process, reference can be made to the related description in FIG. 3.

S507: The processor trusted framework unit updates, based on the registration request, the attribute of the memory space corresponding to the memory address to the secure attribute.

Specifically, the processor trusted framework unit calls the memory protection controller based on the registration request, to update the attribute of the memory space to the secure attribute. In addition, the processor trusted framework unit is further configured to: receive the registration instruction sent by the client application, and forward the registration instruction to the trusted application.

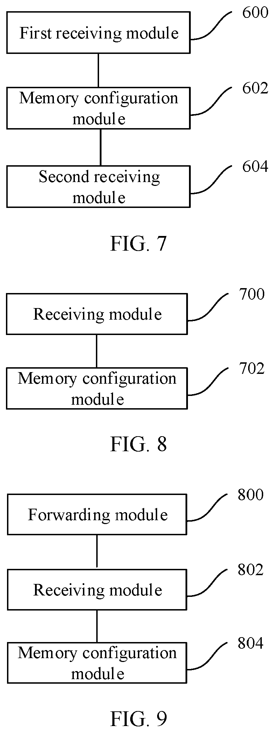

Based on the procedures of dynamically configuring the secure memory shown in FIG. 1, FIG. 3, and FIG. 4, as shown in FIG. 7, an embodiment of this specification further provides a corresponding apparatus for dynamically configuring a secure memory.

FIG. 7 shows an apparatus for dynamically configuring a secure memory according to this specification. The apparatus includes: a first receiving module 600, configured to receive a registration instruction of a secure memory, where the registration instruction carries a memory address requested by a client application; a memory configuration module 602, configured to: call a registration interface of an operating system in a trusted execution environment, and send a registration request of the secure memory to a processor trusted framework unit, based on the registration instruction, so that the processor trusted framework unit updates, based on the registration request, an attribute of memory space corresponding to the memory address to a secure attribute; and a second receiving module 604, configured to: receive a virtual address returned by the operating system in the trusted execution environment, to call, based on the virtual address, the secure memory to execute a service, where the virtual address is a virtual address that is determined by the operating system in the trusted execution environment and that has a mapping relationship with the memory address.

Optionally, the first receiving module 600 is specifically configured to receive the registration instruction, forwarded by the processor trusted framework unit, of the secure memory, where the registration instruction is sent by a client application in a rich execution environment by calling an interface of the processor trusted framework unit, and the memory address is obtained by the client application by sending a request to a contiguous memory allocator.

Optionally, the memory configuration module 602 is specifically configured to: query the registration interface from an interface of the operating system in the trusted execution environment based on the registration instruction; and call the registration interface, and send the memory address to the operating system in the trusted execution environment, so that the operating system in the trusted execution environment sends the registration request of the secure memory to the processor trusted framework unit based on service logic corresponding to the registration interface, where the registration request carries the memory address.

Based on the procedures of dynamically configuring the secure memory shown in FIG. 1, FIG. 3, and FIG. 4, as shown in FIG. 8, an embodiment of this specification further provides a corresponding apparatus for dynamically configuring a secure memory.

FIG. 8 shows an apparatus for dynamically configuring a secure memory according to this specification. The apparatus includes: a receiving module 700, configured to receive a call request of a trusted application for a registration interface, where the call request carries a memory address requested by a client application in a rich execution environment; and a memory configuration module 702, configured to: generate a registration request based on the call request, and send the registration request to a processor trusted framework unit, so that the processor trusted framework unit updates, based on the registration request, an attribute of memory space corresponding to the memory address to a secure attribute.

Optionally, the memory configuration module 702 is specifically configured to: generate the registration request based on service logic corresponding to the registration interface and the memory address carried in the call request; and send the registration request to the processor trusted framework unit, so that the processor trusted framework unit calls a memory protection controller and updates the attribute of the memory space to the secure attribute, where the registration request includes the memory address.

Optionally, the memory configuration module 702 is further configured to: determine that the attribute of the memory space corresponding to the memory address is updated to the secure attribute, then generate a virtual address corresponding to the memory address, and determine a correspondence between the memory address and the virtual address; and return the virtual address to the trusted application, so that the trusted application calls the secure memory based on the virtual address when executing a service.

Based on the procedures of dynamically configuring the secure memory shown in FIG. 1, FIG. 3, and FIG. 4, as shown in FIG. 9, an embodiment of this specification further provides a corresponding apparatus for dynamically configuring a secure memory.

FIG. 9 shows an apparatus for dynamically configuring a secure memory according to this specification. The apparatus includes: a forwarding module 800, configured to: receive a registration instruction sent by a client application in a rich execution environment, where the registration instruction carries a contiguous memory address obtained by the client application by sending a request to a contiguous memory allocator; and forward the registration instruction to the trusted application;
and a receiving module 802, configured to receive a registration request sent by an operating system in a trusted execution environment, where the registration request includes a memory address; and a memory configuration module 804, configured to update, based on the registration request, an attribute of memory space corresponding to the memory address to a secure attribute.

Optionally, the memory configuration module 804 is specifically configured to: based on the registration request, call a memory protection controller, and update the attribute of the memory space corresponding to the memory address to the secure attribute.

This specification further provides a computer-readable storage medium. The storage medium stores a computer program. The computer program can be configured to execute the above-mentioned method for dynamically configuring a secure memory provided in FIG. 1, FIG. 3, and FIG. 4.

In the 1990s, whether a technical improvement is a hardware improvement (for example, an improvement to a circuit structure, such as a diode, a transistor, or a switch) or a software improvement (an improvement to a method procedure) can be clearly distinguished. However, with development of technologies, improvements in many method procedures today can be considered as direct improvements in hardware circuit structures. Design personnel almost all obtain a corresponding hardware circuit structure by programming an improved method procedure to a hardware circuit. Therefore, it cannot be said that an improvement in a method procedure cannot be implemented by a hardware entity module. For example, a programmable logic device (PLD) (for example, a field programmable gate array (FPGA)) is such an integrated circuit, and a logical function of the PLD is determined by a user through device programming. The designer independently performs programming to "integrate" a digital system to a PLD without requesting a chip manufacturer to design and manufacture an application-specific integrated circuit chip. In addition, today, instead of manually making an integrated circuit chip, such programming is also mostly implemented by using "logic compiler" software. The "logic compiler" software is similar to a software compiler used during program development and writing, and original code to be compiled is also written in a specific programming language that is referred to as a hardware description language (HDL). The HDL does not have merely one type, but has a plurality of types, such as an ABEL (Advanced Boolean Expression Language), an AHDL (Altera Hardware Description Language), Confluence, a CUPL (Cornell University Programming Language), HDCal, a JHDL (Java Hardware Description Language), Lava, Lola, MyHDL, PALASM, and an RHDL (Ruby Hardware Description Language). Currently, a VHDL (Very-High-Speed Integrated Circuit Hardware Description Language) and Verilog are most commonly used currently. A person skilled in the art should also be aware that, a hardware circuit that implements a logic method procedure can be easily obtained provided that logic programming is slightly performed on the method procedure by using the foregoing several hardware description languages and the method procedure is programmed into an integrated circuit.

A controller can be implemented in any appropriate manner. For example, the controller can take the form of, for example, a microprocessor or a processor, and a computer-readable medium, a logic gate, a switch, an application-specific integrated circuit (ASIC), a programmable logic controller, and an embedded microcontroller that stores computer-readable program code (such as software or firmware) that can be executed by the (micro) processor. Examples of the controller include but are not limited to the following microcontrollers: ARC 625D, Atmel AT91SAM, Microchip PIC18F26K20, and Silicone Labs C8051F320. A memory controller can also be implemented as a part of control logic of a memory. A person skilled in the art also knows that, in addition to implementing the controller in a pure computer-readable program code manner, the controller can implement the same function in a form of a logic gate, a switch, an application-specific integrated circuit, a programmable logic controller, an embedded microcontroller, etc. by performing logic programming on the method steps. Therefore, the controller can be considered as a hardware component, and an apparatus that is included in the controller and that is configured to implement various functions can also be considered as a structure in the hardware component. Alternatively, an apparatus configured to implement various functions can be considered as both a software module for implementing a method and a structure in a hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, during implementation of this specification, functions of units can be implemented in the same or more software or hardware.

A person skilled in the art should understand that embodiments of this application can be provided as a method, a system, or a computer program product. Therefore, this application can use a form of hardware-only embodiments, software-only embodiments, or embodiments with a combination of software and hardware. In addition, this application can use a form of a computer program product that is implemented on one or more computer-usable storage media (including but not limited to a disk memory, a CD-ROM, an optical memory, etc.) that include computer-usable program code.

Embodiments of this application are described with reference to the flowcharts and/or block diagrams of the method, the device (system), and the computer program product according to embodiments of this application. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions can be alternatively loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory can include a non-persistent storage, a random access memory (RAM), and/or a nonvolatile memory in a computer-readable medium, for example, a read-only memory (ROM) or a flash read-only memory (flash RAM). The memory is an example of the computer-readable medium.

The computer-readable medium includes a persistent and a non-persistent, a removable and a non-removable medium, which implement information storage by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical storage, a cassette tape, a cassette magnetic disk storage, or another magnetic storage device, or any other non-transmission media. The computer storage medium can be configured to store information accessible by a computing device. Based on the definition in this specification, the computer-readable medium does not include transitory media such as a modulated data signal and carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that embodiments of this specification can be provided as a method, a system, or a computer program product. Therefore, this specification can be in a form of a hardware-only embodiment, a software-only embodiment, or an embodiment combining software and hardware aspects. In addition, this specification can be in a form of a computer program product implemented on one or more computer-usable storage media (including but not limited to a magnetic disk storage, a CD-ROM, an optical storage, etc.) including computer-usable program code.

This specification can be described in a general context of a computer-executable instruction executed by a computer, for example, a program module. Generally, the program module includes a routine, a program, an object, a component, a data structure, etc. executing a specific task or implementing a specific abstract data type. This specification can also be practiced in a distributed computing environment in which tasks are performed by remote processing devices connected via a communication network. In the distributed computing environments, the program module can be located in both local and remote computer storage media including storage devices.

Embodiments in this specification are all described in a progressive manner. For same or similar parts in embodiments, refer to these embodiments. Each embodiment focuses on a difference from other embodiments. In particular, for the system embodiment, because the system or system embodiment is basically similar to the method embodiment, descriptions are relatively simple. For related parts, refer to the descriptions in the method embodiment.

The previous descriptions are embodiments of this specification, and are not intended to limit this specification. A person skilled in the art can make various modifications or changes to this specification. Any modification, equivalent replacement and improvement made in this specification shall be included in the scope of the claims of this application.

## Claims

1. A method for dynamically configuring a secure memory, wherein the method comprises:
receiving, by a trusted application and from a client application in a rich execution environment, the client application having determined that a memory address is required for executing a service in a trusted execution environment, a registration instruction of a secure memory, wherein the registration instruction carries the memory address requested by the client application;
calling, by the trusted application, a registration interface of an operating system in a trusted execution environment;
sending, by the trusted application, a registration request of the secure memory to a processor trusted framework unit, based on the registration instruction, so that the processor trusted framework unit updates, based on the registration request, an attribute of memory space corresponding to the memory address to a secure attribute and only the trusted application in the trusted execution environment is configured to access data at the memory address, wherein the client application in the rich execution environment does not have access to data at the memory address; and
receiving a virtual address returned by the operating system in the trusted execution environment, to call, based on the virtual address, the secure memory to execute a service by the client application, wherein the virtual address is determined by the operating system in the trusted execution environment and has a mapping relationship with the memory address.

2. The method according to claim 1, wherein the memory address is a contiguous memory address obtained by the client application by sending a request to a contiguous memory allocator.

3. The method according to claim 1, wherein calling the registration interface of the operating system in the trusted execution environment and sending the registration request of the secure memory to the processor trusted framework unit, based on the registration instruction comprise:
querying the registration interface from an interface of the operating system in the trusted execution environment based on the registration instruction; and
calling the registration interface and sending the memory address to the operating system in the trusted execution environment, so that the operating system in the trusted execution environment sends the registration request of the secure memory to the processor trusted framework unit based on service logic corresponding to the registration interface, wherein the registration request carries the memory address.

4. The method of any one of claims 1 to 3, wherein the method comprises:
receiving, by the operating system in the trusted execution environment, a call request of the trusted application for the registration interface, wherein the call request carries the memory address requested by the client application in a rich execution environment; and
generating, by the operating system in the trusted execution environment, the registration request based on the call request, and sending the registration request to the processor trusted framework unit, so that the processor trusted framework unit updates, based on the registration request, the attribute of memory space corresponding to the memory address to the secure attribute.

5. The method according to claim 4, wherein generating the registration request based on the call request, and sending the registration request to the processor trusted framework unit, so that the processor trusted framework unit updates, based on the registration request, the attribute of the memory space corresponding to the memory address to the secure attribute comprises:
generating, by the operating system in the trusted execution environment, the registration request based on service logic corresponding to the registration interface and the memory address carried in the call request; and
sending, by the operating system in the trusted execution environment, the registration request to the processor trusted framework unit, so that the processor trusted framework unit calls a memory protection controller and updates the attribute of the memory space to the secure attribute, wherein the registration request comprises the memory address.

6. The method according to claim 4, wherein the method further comprises:
in response to determining that the attribute of the memory space corresponding to the memory address is updated to the secure attribute,
generating, by the operating system in the trusted execution environment, a virtual address corresponding to the memory address, and
determining, by the operating system in the trusted execution environment, a correspondence between the memory address and the virtual address; and
returning the virtual address to the trusted application, so that the trusted application calls the secure memory based on the virtual address when executing the service.

7. The method of claim 1, the method comprising:
receiving by the processor trusted framework unit, the registration request sent by the operating system in the trusted execution environment, wherein the registration request comprises the memory address; and
updating, based on the registration request and by the processor trusted framework unit, an attribute of memory space corresponding to the memory address to a secure attribute.

8. The method according to claim 7, wherein the processor trusted framework unit receives the registration request, sent by the operating system in the trusted execution environment, of the secure memory, the method further comprises:
receiving the registration instruction sent by the client application in the rich execution environment, wherein the registration instruction carries a contiguous memory address obtained by the client application by sending a request to a contiguous memory allocator; and
forwarding the registration instruction to a trusted application.

9. The method according to claim 7, wherein updating, based on the registration request, the attribute of the memory space corresponding to the memory address to the secure attribute comprises:
based on the registration request, calling, by the processor trusted framework unit, a memory protection controller, and updating the attribute of the memory space corresponding to the memory address to the secure attribute.

10. A device for dynamically configuring a secure memory, wherein the device comprises a client application running in a rich execution environment, an operating system running in a trusted execution environment, a trusted application, and a processor trusted framework unit, wherein
the client application is configured to:
determine a memory address required for executing a service in the trusted execution environment, and
send a registration instruction to the trusted application, wherein the registration instruction carries the memory address; and
the trusted application is configured to perform the method of any one of claims 1 to 3;
the operating system running in the trusted execution environment is configured to perform the method of any one of claims 4 to 6; and
the processor trusted framework unit is configured to perform the method of any one of claims 7 to 9.

11. A computer-readable storage medium, wherein the storage medium stores a computer program, and the computer program is executed by a processor to implement the method according to any one of claims 1 to 9.

## Patentansprüche

1. Verfahren zum dynamischen Konfigurieren eines sicheren Speichers, wobei das Verfahren Folgendes umfasst:
Empfangen, durch eine vertrauenswürdige Anwendung und von einer Client-Anwendung in einer reichen Ausführungsumgebung, wobei die Client-Anwendung bestimmt hat, dass eine Speicheradresse zum Ausführen eines Dienstes in einer vertrauenswürdigen Ausführungsumgebung erforderlich ist, einer Registrierungsanweisung eines sicheren Speichers, wobei die Registrierungsanweisung die von der Client-Anwendung angeforderte Speicheradresse trägt;
Aufrufen, durch die vertrauenswürdige Anwendung, einer Registrierungsschnittstelle eines Betriebssystems in einer vertrauenswürdigen Ausführungsumgebung;
Senden, durch die vertrauenswürdige Anwendung, einer Registrierungsanfrage des sicheren Speichers an eine vertrauenswürdige Prozessorrahmeneinheit basierend auf der Registrierungsanweisung, so dass die vertrauenswürdige Prozessorrahmeneinheit basierend auf der Registrierungsanfrage ein Attribut eines Speicherraums, der der Speicheradresse entspricht, auf ein sicheres Attribut aktualisiert, und nur die vertrauenswürdige Anwendung in der vertrauenswürdigen Ausführungsumgebung dazu ausgebildet ist, auf Daten an der Speicheradresse zuzugreifen, wobei die Client-Anwendung in der reichen Ausführungsumgebung keinen Zugriff auf Daten an der Speicheradresse hat; und
Empfangen einer virtuellen Adresse, die durch das Betriebssystem in der vertrauenswürdigen Ausführungsumgebung zurückgegeben wird, um basierend auf der virtuellen Adresse den sicheren Speicher aufzurufen, um einen Dienst durch die Client-Anwendung auszuführen, wobei die virtuelle Adresse durch das Betriebssystem in der vertrauenswürdigen Ausführungsumgebung bestimmt wird und eine Zuordnungsbeziehung mit der Speicheradresse aufweist.

2. Verfahren nach Anspruch 1, wobei die Speicheradresse eine zusammenhängende Speicheradresse ist, die durch die Client-Anwendung durch Senden einer Anforderung an einen zusammenhängenden Speicherzuteiler erhalten wird.

3. Verfahren nach Anspruch 1, wobei das Aufrufen der Registrierungsschnittstelle des Betriebssystems in der vertrauenswürdigen Ausführungsumgebung und das Senden der Registrierungsanfrage des sicheren Speichers an die vertrauenswürdige Prozessorrahmeneinheit basierend auf der Registrierungsanweisung Folgendes umfassen:
Abfragen der Registrierungsschnittstelle von einer Schnittstelle des Betriebssystems in der vertrauenswürdigen Ausführungsumgebung basierend auf der Registrierungsanweisung; und
Aufrufen der Registrierungsschnittstelle und Senden der Speicheradresse an das Betriebssystem in der vertrauenswürdigen Ausführungsumgebung, so dass das Betriebssystem in der vertrauenswürdigen Ausführungsumgebung die Registrierungsanfrage des sicheren Speichers an die vertrauenswürdige Prozessorrahmeneinheit basierend auf Dienstlogik sendet, die der Registrierungsschnittstelle entspricht, wobei die Registrierungsanfrage die Speicheradresse trägt.

4. Verfahren nach einem der Ansprüche 1 bis 3, wobei das Verfahren Folgendes umfasst:
Empfangen, durch das Betriebssystem in der vertrauenswürdigen Ausführungsumgebung, einer Anrufanfrage der vertrauenswürdigen Anwendung für die Registrierungsschnittstelle, wobei die Anrufanfrage die von der Client-Anwendung angeforderte Speicheradresse in einer reichen Ausführungsumgebung trägt; und
Erzeugen, durch das Betriebssystem in der vertrauenswürdigen Ausführungsumgebung, der Registrierungsanfrage basierend auf der Anrufanfrage und Senden der Registrierungsanfrage an die vertrauenswürdige Prozessorrahmeneinheit, so dass die vertrauenswürdige Prozessorrahmeneinheit basierend auf der Registrierungsanfrage das Attribut des Speicherraums, das der Speicheradresse entspricht, an das sichere Attribut aktualisiert.

5. Verfahren nach Anspruch 4, wobei das Erzeugen der Registrierungsanfrage basierend auf der Anrufanfrage und das Senden der Registrierungsanfrage an die vertrauenswürdige Prozessorrahmeneinheit, so dass die vertrauenswürdige Prozessorrahmeneinheit basierend auf der Registrierungsanfrage das Attribut des Speicherraums, der der Speicheradresse entspricht, an das sichere Attribut aktualisiert, Folgendes umfasst:
Erzeugen, durch das Betriebssystem in der vertrauenswürdigen Ausführungsumgebung, der Registrierungsanfrage basierend auf Dienstlogik, die der Registrierungsschnittstelle und der Speicheradresse entspricht, die in der Anrufanfrage getragen wird; und
Senden, durch das Betriebssystem in der vertrauenswürdigen Ausführungsumgebung, der Registrierungsanfrage an die vertrauenswürdige Prozessorrahmeneinheit, so dass die vertrauenswürdige Prozessorrahmeneinheit eine Speicherschutzsteuerung aufruft und das Attribut des Speicherraums auf das sichere Attribut aktualisiert, wobei die Registrierungsanfrage die Speicheradresse umfasst.

6. Verfahren nach Anspruch 4, wobei das Verfahren ferner Folgendes umfasst:
als Reaktion auf das Bestimmen, dass das Attribut des Speicherraums, das der Speicheradresse entspricht, auf das sichere Attribut aktualisiert wird,
Erzeugen, durch das Betriebssystem in der vertrauenswürdigen Ausführungsumgebung, einer virtuellen Adresse, die der Speicheradresse entspricht, und
Bestimmen, durch das Betriebssystem in der vertrauenswürdigen Ausführungsumgebung, einer Entsprechung zwischen der Speicheradresse und der virtuellen Adresse; und
Zurückgeben der virtuellen Adresse an die vertrauenswürdige Anwendung, sodass die vertrauenswürdige Anwendung den sicheren Speicher basierend auf der virtuellen Adresse aufruft, wenn der Dienst ausgeführt wird.

7. Verfahren nach Anspruch 1, wobei das Verfahren Folgendes umfasst:
Empfangen, durch die vertrauenswürdige Prozessorrahmeneinheit, der Registrierungsanfrage, die durch das Betriebssystem in der vertrauenswürdigen Ausführungsumgebung gesendet wird, wobei die Registrierungsanfrage die Speicheradresse umfasst; und
Aktualisieren, basierend auf der Registrierungsanfrage und durch die vertrauenswürdige Prozessorrahmeneinheit, eines Attributs eines Speicherraums, der der Speicheradresse entspricht, auf ein sicheres Attribut.

8. Verfahren nach Anspruch 7, wobei die vertrauenswürdige Prozessorrahmeneinheit die Registrierungsanfrage, die durch das Betriebssystem in der vertrauenswürdigen Ausführungsumgebung gesendet wird, des sicheren Speichers empfängt, wobei das Verfahren ferner Folgendes umfasst:
Empfangen der Registrierungsanweisung, die durch die Client-Anwendung in der reichen Ausführungsumgebung gesendet wird, wobei die Registrierungsanweisung eine zusammenhängende Speicheradresse trägt, die durch die Client-Anwendung durch Senden einer Anfrage an einen zusammenhängenden Speicherzuteiler erhalten wird; und
Weiterleiten der Registrierungsanweisung an eine vertrauenswürdige Anwendung.

9. Verfahren nach Anspruch 7, wobei das Aktualisieren, basierend auf der Registrierungsanfrage, des Attributs des Speicherraums, der der Speicheradresse entspricht, auf das sichere Attribut Folgendes umfasst:
basierend auf der Registrierungsanfrage, Aufrufen, durch die vertrauenswürdige Prozessorrahmeneinheit, einer Speicherschutzsteuerung und Aktualisieren des Attributs des Speicherraums, der der Speicheradresse entspricht, auf das sichere Attribut.

10. Vorrichtung zum dynamischen Konfigurieren eines sicheren Speichers, wobei die Vorrichtung eine Client-Anwendung, die in einer reichen Ausführungsumgebung läuft, ein Betriebssystem, das in einer vertrauenswürdigen Ausführungsumgebung läuft, eine vertrauenswürdige Anwendung und eine vertrauenswürdige Prozessorrahmeneinheit umfasst, wobei
die Client-Anwendung für Folgendes ausgebildet ist:
Bestimmen einer Speicheradresse, die zum Ausführen eines Dienstes in der vertrauenswürdigen Ausführungsumgebung erforderlich ist, und
Senden einer Registrierungsanweisung an die vertrauenswürdige Anwendung, wobei die Registrierungsanweisung die Speicheradresse trägt; und
die vertrauenswürdige Anwendung zur Durchführung des Verfahrens nach einem der Ansprüche 1 bis 3 ausgebildet ist;
wobei das Betriebssystem, das in der vertrauenswürdigen Ausführungsumgebung läuft, dazu ausgebildet ist, das Verfahren nach einem der Ansprüche 4 bis 6 durchzuführen; und
die vertrauenswürdige Rahmeneinheit des Prozessors zur Durchführung des Verfahrens gemäß einem der Ansprüche 7 bis 9 ausgebildet ist.

11. Computerlesbares Speichermedium, wobei das Speichermedium ein Computerprogramm speichert und das Computerprogramm von einem Prozessor ausgeführt wird, um das Verfahren gemäß einem der Ansprüche 1 bis 9 zu implementieren.

## Revendications

1. Procédé pour configurer dynamiquement une mémoire sécurisée, dans lequel le procédé comprend les faits :
de recevoir, par une application de confiance et en provenance d'une application client dans un environnement d'exécution riche, l'application client ayant déterminé qu'une adresse de mémoire est requise pour exécuter un service dans un environnement d'exécution de confiance, une instruction d'enregistrement d'une mémoire sécurisée, dans lequel l'instruction d'enregistrement porte l'adresse de mémoire demandée par l'application client ;
d'appeler, par l'application de confiance, une interface d'enregistrement d'un système d'exploitation dans un environnement d'exécution de confiance ;
d'envoyer, par l'application de confiance, une demande d'enregistrement de la mémoire sécurisée à une unité d'infrastructure de confiance de processeur, sur la base de l'instruction d'enregistrement, de telle sorte que l'unité d'infrastructure de confiance de processeur actualise, sur la base de la demande d'enregistrement, un attribut d'espace de mémoire, correspondant à l'adresse de mémoire, en un attribut sécurisé, et seulement l'application de confiance dans l'environnement d'exécution de confiance est configurée pour accéder à des données à l'adresse de mémoire, dans lequel l'application client dans l'environnement d'exécution riche n'a pas d'accès à des données à l'adresse de mémoire ; et
de recevoir une adresse virtuelle renvoyée par le système d'exploitation dans l'environnement d'exécution de confiance, pour appeler, sur la base de l'adresse virtuelle, la mémoire sécurisée pour exécuter un service par l'application client, dans lequel l'adresse virtuelle est déterminée par le système d'exploitation dans l'environnement d'exécution de confiance et a une relation de mappage avec l'adresse de mémoire.

2. Procédé selon la revendication 1, dans lequel l'adresse de mémoire est une adresse de mémoire contiguë obtenue par l'application client en envoyant une demande à un programme d'attribution de mémoire contiguë.

3. Procédé selon la revendication 1, dans lequel les faits d'appeler l'interface d'enregistrement du système d'exploitation dans l'environnement d'exécution de confiance et d'envoyer la demande d'enregistrement de la mémoire sécurisée à l'unité d'infrastructure de confiance de processeur, sur la base de l'instruction d'enregistrement comprennent les faits :
d'interroger l'interface d'enregistrement depuis une interface du système d'exploitation dans l'environnement d'exécution de confiance sur la base de l'instruction d'enregistrement ; et
d'appeler l'interface d'enregistrement et d'envoyer l'adresse de mémoire au système d'exploitation dans l'environnement d'exécution de confiance, de telle sorte que le système d'exploitation dans l'environnement d'exécution de confiance envoie la demande d'enregistrement de la mémoire sécurisée à l'unité d'infrastructure de confiance de processeur sur la base d'une logique de service correspondant à l'interface d'enregistrement, dans lequel la demande d'enregistrement porte l'adresse de mémoire.

4. Procédé de l'une quelconque des revendications 1 à 3, dans lequel le procédé comprend les faits :
de recevoir, par le système d'exploitation dans l'environnement d'exécution de confiance, une demande d'appel de l'application de confiance pour l'interface d'enregistrement, dans lequel la demande d'appel porte l'adresse de mémoire demandée par l'application client dans un environnement d'exécution riche ; et
de générer, par le système d'exploitation dans l'environnement d'exécution de confiance, la demande d'enregistrement sur la base de la demande d'appel, et d'envoyer la demande d'enregistrement à l'unité d'infrastructure de confiance de processeur, de telle sorte que l'unité d'infrastructure de confiance de processeur actualise, sur la base de la demande d'enregistrement, l'attribut d'espace de mémoire correspondant à l'adresse de mémoire en l'attribut sécurisé.

5. Procédé selon la revendication 4, dans lequel les faits de générer la demande d'enregistrement sur la base de la demande d'appel, et d'envoyer la demande d'enregistrement à l'unité d'infrastructure de confiance de processeur, de telle sorte que l'unité d'infrastructure de confiance de processeur actualise, sur la base de la demande d'enregistrement, l'attribut de l'espace de mémoire correspondant à l'adresse de mémoire en l'attribut sécurisé comprennent les faits :
de générer, par le système d'exploitation dans l'environnement d'exécution de confiance, la demande d'enregistrement sur la base d'une logique de service correspondant à l'interface d'enregistrement et de l'adresse de mémoire portée dans la demande d'appel ; et
d'envoyer, par le système d'exploitation dans l'environnement d'exécution de confiance, la demande d'enregistrement à l'unité d'infrastructure de confiance de processeur, de telle sorte que l'unité d'infrastructure de confiance de processeur appelle un contrôleur de protection de mémoire et actualise l'attribut de l'espace de mémoire en l'attribut sécurisé, dans lequel la demande d'enregistrement comprend l'adresse de mémoire.

6. Procédé selon la revendication 4, dans lequel le procédé comprend en outre les faits :
en réponse au fait de déterminer que l'attribut de l'espace de mémoire correspondant à l'adresse de mémoire est actualisé en l'attribut sécurisé,
de générer, par le système d'exploitation dans l'environnement d'exécution de confiance, une adresse virtuelle correspondant à l'adresse de mémoire, et
de déterminer, par le système d'exploitation dans l'environnement d'exécution de confiance, une correspondance entre l'adresse de mémoire et l'adresse virtuelle ; et
de renvoyer l'adresse virtuelle à l'application de confiance, de telle sorte que l'application de confiance appelle la mémoire sécurisée sur la base de l'adresse virtuelle lors du fait d'exécuter le service.

7. Procédé de la revendication 1, le procédé comprenant les faits :
de recevoir par l'unité d'infrastructure de confiance de processeur, la demande d'enregistrement envoyée par le système d'exploitation dans l'environnement d'exécution de confiance, dans lequel la demande d'enregistrement comprend l'adresse de mémoire ; et
d'actualiser, sur la base de la demande d'enregistrement et par l'unité d'infrastructure de confiance de processeur, un attribut d'espace de mémoire correspondant à l'adresse de mémoire en un attribut sécurisé.

8. Procédé selon la revendication 7, dans lequel l'unité d'infrastructure de confiance de processeur reçoit la demande d'enregistrement, envoyée par le système d'exploitation dans l'environnement d'exécution de confiance, de la mémoire sécurisée, le procédé comprend en outre les faits :
de recevoir l'instruction d'enregistrement envoyée par l'application client dans l'environnement d'exécution riche, dans lequel l'instruction d'enregistrement porte une adresse de mémoire contiguë obtenue par l'application client en envoyant une demande à un programme d'attribution de mémoire contiguë ; et
de réacheminer l'instruction d'enregistrement jusqu'à une application de confiance.

9. Procédé selon la revendication 7, dans lequel le fait d'actualiser, sur la base de la demande d'enregistrement, l'attribut de l'espace de mémoire correspondant à l'adresse de mémoire à l'attribut sécurisé comprend les faits :
sur la base de la demande d'enregistrement, d'appeler, par l'unité d'infrastructure de confiance de processeur, un contrôleur de protection de mémoire, et d'actualiser l'attribut de l'espace de mémoire correspondant à l'adresse de mémoire à l'attribut sécurisé.

10. Dispositif pour configurer dynamiquement une mémoire sécurisée, dans lequel le dispositif comprend une application client fonctionnant dans un environnement d'exécution riche, un système d'exploitation fonctionnant dans un environnement d'exécution de confiance, une application de confiance, et une unité d'infrastructure de confiance de processeur, dans lequel l'application client est configurée pour :
déterminer une adresse de mémoire requise pour exécuter un service dans l'environnement d'exécution de confiance, e
envoyer une instruction d'enregistrement à l'application de confiance, dans lequel l'instruction d'enregistrement porte l'adresse de mémoire ; et
l'application de confiance est configurée pour réaliser le procédé de l'une quelconque des revendications 1 à 3 ;
le système d'exploitation fonctionnant dans l'environnement d'exécution de confiance est configuré pour réaliser le procédé de l'une quelconque des revendications 4 à 6 ; et
l'unité d'infrastructure de confiance de processeur est configurée pour réaliser le procédé de l'une quelconque des revendications 7 à 9.

11. Support de stockage lisible par ordinateur, dans lequel le support de stockage stocke un programme d'ordinateur, et le programme d'ordinateur est exécuté par un processeur pour mettre en œuvre le procédé selon l'une quelconque des revendications 1 à 9.
